# EUROPÄISCHE PATENTANMELDUNG

(11) **EP 1 500 842 A2**
(43) Veröffentlichungstag der Anmeldung: **26.01.2005**
(21) Anmeldenummer: 04015723.2
(22) Anmeldetag: 03.07.2004
(51) Int. Cl.: F16F 1/373, F16F 1/376, F16F 3/087

(54) **Dämpferlager**

(30) Priorität: 21.07.2003 DE 10333266
(71) Anmelder: BASF AKTIENGESELLSCHAFT, 67056 Ludwigshafen (DE)
(72) Erfinder: Gehring, Tom, 49456 Bakum (DE)

(57) **Zusammenfassung**

Die Erfindung betrifft ein Dämpferlager enthaltend mindestens einen Einleger (i), mindestens ein elastisches Lagerelement (ii) oberhalb des Einlegers (i) sowie mindestens ein elastisches Lagerelement (iii) unterhalb des Einlegers (i), wobei die elastischen Lagerelemente (ii) und (iii) bei einem Federweg von 1,5 mm einen Unterschied in der Anlaufsteifigkeit von mindestens 50 N/mm aufweisen.

## Beschreibung

Die Erfindung betrifft Dämpferlager, bevorzugt Rundlager enthaltend mindestens einen bevorzugt scheibenförmigen, bevorzugt flachen, bevorzugt mit einer mittigen Bohrung versehenen Einleger (i), mindestens ein elastisches, bevorzugt ringförmiges Lagerelement (ii) oberhalb des Einlegers (i) sowie mindestens ein elastisches bevorzugt ringförmiges Lagerelement (iii) unterhalb des Einlegers (i), wobei (ii) bevorzugt den äußeren Rand der Oberseite des Einlegers (i) abdeckt und (iii) bevorzugt den äußeren Rand der Unterseite des Einlegers (i) abdeckt, dadurch gekennzeichnet, dass die elastischen Lagerelemente (ii) und (iii) bei einem Federweg von 1,5 mm einen Unterschied in der Anlaufsteifigkeit von mindestens 50 N/mm, bevorzugt zwischen 50 N/mm und 250 N/mm aufweisen. Dabei ist als Federweg der Weg unter Belastung ausgehend von der unbelasteten Ausdehnung des jeweiligen Lagerelementes (i) bzw. (iii) zu verstehen. Die Anlaufsteifigkeit ergibt sich in einem Kraft-Weg-Diagramm, in dem die Federkennlinie dargestellt wird, aus der Kraft, die aufgewendet werden muss, um einen bestimmten Federweg (hier 1,5 mm) zu erreichen. Des weiteren bezieht sich die Erfindung auf Dämpferlager enthaltend mindestens einen Einleger (i), mindestens ein elastisches Lagerelement (ii) oberhalb des Einlegers (i) sowie mindestens ein elastisches Lagerelement (iii) unterhalb des Einlegers (i), wobei das elastische Lagerelement (ii) auf Gummi, geschäumten thermoplastischem Polyurethan, oder einem Styrol-Butadien-Copolymer basiert und das Lagerelement (iii) auf zeitigen Polyurethanelastomeren basiert. Außerdem betrifft die Erfindung Federkonstruktionen enthaltend eine Kolbenstange an dessen Ende ein Einleger (i) befestigt ist, der sich in einem Gehäuse befindet, das einen seitlichen Rand und einen unteren Rand aufweist, sowie unterhalb des unteren Randes des Gehäuses eine hohle zylindrische Zusatzfeder, die die Kolbenstange umschließt, wobei der Einleger Teil des erfindungsgemäßen Dämpferlagers ist. Des weiteren bezieht sich die Erfindung auf Automobile, Busse oder Lastkraftwagen, bevorzugt Automobile enthaltend die erfindungsgemäßen Dämpferlager und/oder Federkonstruktion(en).

Dämpferlager werden in Automobilen innerhalb des Fahrwerks z.B. zur Anbindung der Kolbenstange des Stoßdämpfers an die Karosserie des Automobils und bei der Lagerung von Aggregaten verwendet und sind allgemein bekannt. Üblicherweise wird die Kolbenstange des Stoßdämpfers mit dem Einleger des Dämpferlagers verschraubt, der wiederum durch die Lagerelemente in axiale Richtung, d.h. in Richtung der Kolbenstange, sowie ggf. in radiale Richtung elastisch gelagert ist. Mit Hilfe von Dämpferlagern werden im Automobil Aggregate, beispielsweise Motor, Getriebe, Luftpresser, Kompressor, oder Fahrwerksbauteile, z.B. Hilfsrahmenlager, Blattfederlager, Lenker, u.a. untereinander oder mit der Karosserie verbunden. Dabei erfüllen sie durch die Verwendung von Elastomerwerkstoffen die Funktion einer elastischen Lagerung; andererseits sind sie auf Grund ihrer viskosen Eigenschaften in der Lage, Energie zu dissipieren und damit Schwingungen zu dämpfen. Dabei wird ein hohes Maß an Dämpfung besonders für die Bedämpfung großer Amplituden von niederfrequenten Schwingungen benötigt, die z.B. die Anbindung der Stossdämpfers an die Karosserie beeinflussen. Andererseits ist bei kleinen Amplituden und höheren Frequenzen eine hohe Dämpfung aus Gründen der Fahrzeugakustik unerwünscht. Das Dämpfungsverhalten derzeitiger, konventioneller Rundlager ist abhängig vom materialimmanenten Dämpfungsvermögen des eingesetzten Elastomerwerkstoffes.

Aufgabe der vorliegenden Erfindung war es, Dämpferlager, insbesondere Federkonstruktionen zur Anbindung der Kolbenstange des Automobilstoßdämpfers an die Automobilkarosserie zu entwickeln, die eine individuelle Abstimmung von Druck- und Zugstufen ermöglichen. Außerdem sollte eine möglichst weiche Einfederung ermöglicht werden bei gleichzeitig einfachem Herstellprozess.

Diese Aufgabe konnte durch die eingangs dargestellten Dämpferlager und Federkonstruktionen gelöst werden.

Erfindungswesentlich ist, dass sich die beiden Lagerelemente (ii) und (iii) in der Anlaufsteifigkeit unterscheiden. Dieser Unterscheid kann sowohl durch unterschiedliche Materialien für die beiden Lagerelemente (ii) und (iii) erreicht werden als auch durch Variationen bei dem gleichem Material, beispielsweise indem man die Dichte des einen Lagerelements höher wählt als die dichte des anderen Lagerelementes. Auf durch unterschiedliche Abmessungen, beispielsweise in der Breite des ringförmigen Lagerelementes, ist es möglich, die Anlaufsteifigkeiten individuell zu variieren.

Wie bereits eingangs dargestellt können durch diesen erfindungswesentlichen Unterschied im Eigenschaftsprofil der Lagerelemente die Eigenschaften des Dämpferlagers unter Zug- und Druckbeanspruchung individuell gesteuert und eingestellt werden. Dabei kann das Lagerelement (iii) und gegebenenfalls (ii) bevorzugt auf zelligen Polyurethanelastomeren basieren, besonders bevorzugt auf der Basis von zelligen Polyurethanelastomeren, bevorzugt mit einer Dichte nach DIN 53 420 von 200 bis 1100, bevorzugt 300 bis 800 kg/m³, einer Zugfestigkeit nach DIN 53571 von ≥ 2, bevorzugt 2 bis 8 N/mm², einer Dehnung nach DIN 53571 von ≥ 300, bevorzugt 300 bis 700 % und einer Weiterreißfestigkeit nach DIN 53515 von ≥ 8, bevorzugt 8 bis 25 N/mm. Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm. Besonders bevorzugt besitzen die Elastomere die eingangs dargestellten physikalischen Eigenschaften. Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771. Elastomere von zelligen Polyisocyanat-Polyadditionsprodukte werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten. Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
a) Isocyanat,
b) gegenüber Isocyanaten reaktiven Verbindungen,
c) Wasser und gegebenenfalls
d) Katalysatoren,
e) Treibmittel und/oder
f) Hilfs- und/oder Zusatzstoffe, beispielsweise Polysiloxane und/oder Fettsäuresulfonate.

Bevorzugt weisen die zelligen Polyisocyanat-Polyadditionsprodukte einen Druckverformungsrest kleiner 25 % nach DIN 53572, wobei als Prüfkörper Würfel der Abmessung 40 mm x 40 mm x 30 mm ohne Silikonanstrich verwendet werden, die Prüfung bei konstanter Verformung erfolgt, wobei die Prüfkörper um 40% zusammengedrückt und 22 Stunden bei 80°C im Umluftschrank gehalten werden, die Prüfeinrichtung nach der Entnahe aus dem Wärmeschrank 2 Stunden im zusammengedrückten Zustand auf Raumtemperatur abgekühlt wird, anschließend der Prüfkörper aus der Prüfeinrichtung entnommen wird und 10 min ± 30 s nach der Entnahme der Prüfkörper aus der Prüfeinrichtung die Höhe der Prüfkörper auf 0,1 mm genau gemessen wird.

Bevorzugt kann das Lagerelement (ii) auf Gummi oder einem Styrol-Butadien-Copolymer basieren.

Besonders bevorzugt sind somit Dämpferlager enthaltend mindestens einen Einleger (i), mindestens ein elastisches Lagerelement (ii) oberhalb des Einlegers (i) sowie mindestens ein elastisches Lagerelement (iii) unterhalb des Einlegers (i), wobei das elastische Lagerelement (ii) auf Gummi, geschäumten thermoplastischem Polyurethan, oder einem Styrol-Butadien-Copolymer basiert und das Lagerelement (iii) auf zelligen Polyurethanelastomeren basiert.

Der Einleger (i) weist bevorzugt eine Höhe, d.h. eine Länge zwischen Unterseite und Oberseite, zwischen 3 mm und 20 mm, besonders bevorzugt 5 mm und 15 mm, und einen Durchmesser zwischen 20 mm und 100 mm, besonders bevorzugt zwischen 30 mm und 70 mm auf. Der äußere Rand des Einlegers (i) wird bevorzugt zumindest teilweise von den Lagerelementen (ii) und (iii) umfasst, d.h. der Einleger (i) in Vertiefungen in den Lagerelementen (ii) und (iii), die einen größeren Durchmesser aufweisen als der Einleger (i), positioniert wird.

Die Lagerelemente (ii) und (iii) weisen bevorzugt jeweils einen äußeren Durchmesser zwischen 40 mm und 120 mm sowie eine Höhe zwischen 5 mm und 40 mm auf. Besonders bevorzugt ist der äußere Durchmesser der beiden Lagerelemente (ii) und (iii) identisch. Bevorzugt beträgt die Breite der ringförmigen Lagerelemente (ii) und (iii), d.h. Differenz von äußerem Durchmesser und Durchmesser des Hohlraums, zwischen 5 mm und 50 mm. Die Lagerelemente (ii) und (iii), die oberhalb und unterhalb des Einlegers (i) positioniert sind und den Einleger in axialer Richtung dämpfen, d.h. abfedern sollen, können jeweils unter Spannung zwischen dem Einleger (i) und einer oberen bzw. unteren Begrenzung vorliegen.

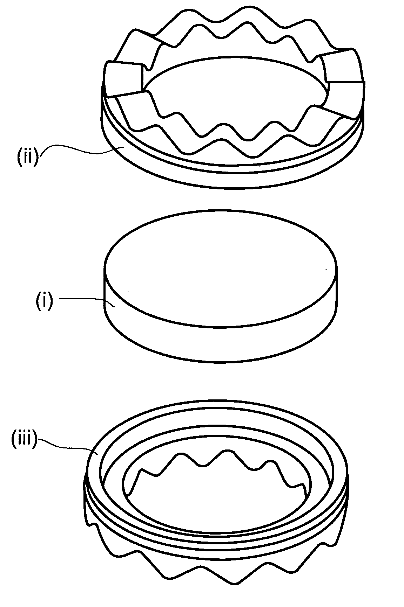

Die Lagerelemente (ii) und (iii) sind bevorzugt derart ausgestaltet, dass die obere Oberfläche von (ii) und/oder die untere Oberfläche von (iii), d.h. jeweils die vom Einleger (i) abgewandte Oberfläche von (ii) und (iii), in ihrer Höhe variieren. Anhand der Figur 1 wird insbesondere diese bevorzugte Ausgestaltung des Oberflächen deutlich. Die Lagerelemente weisen in axialer Richtung, in der die Federung erfolgt, eine unterschiedliche, d.h. variable Ausdehnung auf, durch die beispielsweise das wellenförmige Erscheinungsbild des Randes geprägt wird. Aufgrund dieser wellenförmigen Ausgestaltung wird erreicht, dass bei der Einfederung am Anfang nur ein kleinerer Teil des Rands, d.h. die Wellenberge dämpfend wirken, während die Wellentäler erst dann zum Einsatz kommen, wenn das Federelement soweit gestaucht ist, dass auch diese in Kontakt mit dem abzufedernden Werkzeug kommen. Dadurch wird eine besonders weiche Einfederung erzielt.

Bevorzugt ist somit die obere Oberfläche von (ii) und/oder die untere Oberfläche von (iii) wellenförmig, z.B. sinusförmig ausgebildet, d.h. sie weisen bevorzugt zwischen 4 und 16 Wellenberge (iv) und Wellentäler (v) auf. Dabei ist die maximale Höhe des Lagerelementes (ii) und/oder (iii) zwischen 2 mm und 10 mm, besonders bevorzugt 3 mm und 8 mm, insbesondere 3 mm und 4 mm größer ist als die minimale Höhe des Lagerelementes (ii) und/oder (iii). Die wellenförmige Oberfläche der Lagerelemente (ii) und/oder (iii) ist bevorzugt derart ausgestaltet, dass die axiale Ausdehnung in Abhängigkeit des Winkels konstant ist. Bevorzugt weist somit die Oberfläche von (ii) und/oder (iii) in radialer Richtung eine gleichbleibende Höhe auf, d.h. der Rand ist in radialer Richtung eben, wobei der gegenüberliegende Rand durchaus eine unterschiedliche Höhe aufweisen kann.

Alternativ kann das Federelement derart ausgestaltet sein, dass in der Seitenansicht, d.h. in der Ansicht auf die Mantelfläche des Zylinders, die Kontur von mindestens einem Ende nicht wellenförmig ausgestaltet ist, sondern eckige, z.B. rechteckige oder trapezförmige Erhebungen in axiale Richtung aufweist. Bevorzugt kann somit der Rand (ii) in der Seitenansicht ein eckiges Profil aufweist, d.h. beispielsweise eine rechteckige und/oder trapezförmige Kontur.

Ein beispielhaftes Dämpferlager ist in der Figur 1 dargestellt. Anhand dieser Darstellung wird deutlich, wie der Einleger bevorzugt teilweise in den Lagerelementen positioniert wird, indem (i) in einer Vertiefung in den Lagerelementen platziert wird. Der seitliche Rand des Einlegers wird dabei von den Lagerelementen (ii) und (iii) auch in radiale Richtung elastisch gelagert. Anhand der Figur wird zudem die bevorzugte wellenförmige Kontur der unteren bzw. oberen Oberfläche der Lagerelemente (ii) und (iii), d.h. die Oberflächen in axialer Verlängerung, deutlich. Dabei zeigen die Wellenkämme konzentrisch zur Mitte der ringförmigen Lagerelemente (ii) und (iii).

## Patentansprüche

1. Dämpferlager enthaltend mindestens einen Einleger (i), mindestens ein elastisches Lagerelement (ii) oberhalb des Einlegers (i) sowie mindestens ein elastisches Lagerelement (iii) unterhalb des Einlegers (i), dadurch gekennzeichnet, dass die elastischen Lagerelemente (ii) und (iii) bei einem Federweg von 1,5 mm einen Unterschied in der Anlaufsteifigkeit von mindestens 50 N/mm aufweisen.

2. Dämpferlager enthaltend mindestens einen Einleger (i), mindestens ein elastisches Lagerelement (ii) oberhalb des Einlegers (i) sowie mindestens ein elastisches Lagerelement (iii) unterhalb des Einlegers (i), **dadurch gekennzeichnet, dass** das elastische Lagerelement (ii) auf Gummi, geschäumten thermoplastischem Polyurethan, oder einem Styrol-Butadien-Copolymer basiert und das Lagerelement (iii) auf zeitigen Polyurethanelastomeren basiert.

3. Dämpferlager gemäß Anspruch 1, **dadurch gekennzeichnet, dass** das Lagerelement (iii) auf zelligen Polyurethanelastomeren basiert.

4. Dämpferleger gemäß Anspruch 1 oder 2, **dadurch gekennzeichnet, dass** das Lagerelemente (iii) auf zelligen Polyurethanelastomeren mit einer Dichte nach DIN 53420 von 200 bis 1100 kg/m³, einer Zugfestigkeit nach DIN 53571 von ≥ 2 N/mm², einer Dehnung nach DIN 53571 von ≥ 300 % und einer Weiterreißfestigkeit nach DIN 53515 von ≥ 8 N/mm basiert.

5. Dämpferlager gemäß Anspruch 1, **dadurch gekennzeichnet, dass** das Lagerelement (ii) auf Gummi oder einem Styrol-Butadien-Copolymer basiert.

6. Dämpferlager gemäß Anspruch 1 oder 2, **dadurch gekennzeichnet, dass** der Einleger eine Höhe zwischen 3 mm und 20 mm und einen Durchmesser zwischen 20 mm und 100 mm aufweist.

7. Dämpferlager gemäß Anspruch 1 oder 2, **dadurch gekennzeichnet, dass** der äußere Rand des Einlegers (i) teilweise von den Lagerelementen (ii) und (iii) umfasst wird.

8. Dämpferlager gemäß Anspruch 1 oder 2, **dadurch gekennzeichnet, dass** die Lagerelemente (ii) und (iii) jeweils einen äußeren Durchmesser zwischen 40 mm und 120 mm sowie eine Höhe zwischen 5 mm und 40 mm aufweisen.

9. Dämpferlager gemäß Anspruch 1 oder 2, **dadurch gekennzeichnet, dass** die ringförmigen Lagerelemente (ii) und (iii) jeweils eine Breite zwischen 5 mm und 50 mm aufweisen.

10. Dämpferlager gemäß Anspruch 1 oder 2, **dadurch gekennzeichnet, dass** die obere Oberfläche von (ii) und/oder die untere Oberfläche von (iii) in ihrer Höhe variieren.

11. Dämpferlager gemäß Anspruch 1 oder 2, **dadurch gekennzeichnet, dass** die obere Oberfläche von (ii) und/oder die untere Oberfläche von (iii) wellenförmig ausgebildet sind.

12. Dämpferlager gemäß Anspruch 1 oder 2, **dadurch gekennzeichnet, dass** jeweils für die Lagerelemente (ii) und (iii) die maximale Höhe zwischen 2 mm und 10 mm größer ist als die minimale Höhe.

13. Federkonstruktion enthaltend eine Kolbenstange an dessen Ende ein Einleger (i) befestigt ist, der sich in einem Gehäuse befindet, das einen seitlichen Rand und einen unteren Rand aufweist, sowie unterhalb des unteren Randes des Gehäuses eine hohle zylindrische Zusatzfeder, die die Kolbenstange umschließt, **dadurch gekennzeichnet, dass** der Einleger Teil eines Dämpferlagers gemäß einem der Ansprüche 1 bis 12 ist.

14. Automobile enthaltend Dämpferlager gemäß einem der Ansprüche 1 bis 12 und/oder Federkonstruktion(en) gemäß Anspruch 13.
